# EUROPEAN PATENT SPECIFICATION

(11) **EP 4 328 370 B1**
(45) Date of publication and mention of the grant of the patent: **06.05.2026**
(21) Application number: 21938965.7
(22) Date of filing: 16.11.2021
(51) Int. Cl.: D06F 33/34, D06F 33/36, D06F 39/40, D06F 25/00, D06F 103/18, D06F 105/02, D06F 105/48, D06F 35/00

(54) **WASHING MACHINE AND CONTROL METHOD AND DEVICE THEREOF**
WASCHMASCHINE UND STEUERUNGSVERFAHREN UND VORRICHTUNG DAFÜR
LAVE-LINGE, PROCÉDÉ DE COMMANDE ET DISPOSITIF ASSOCIÉS

(30) Priority: 25.04.2021 CN 202110446572
(43) Date of publication of application: 28.02.2024
(73) Proprietor: Wuxi Little Swan Electric Co., Ltd., Wuxi, Jiangsu 214000 (CN)
(72) Inventor: ZHANG, Ying, Wuxi, Jiangsu 214000 (CN); ZHANG, Wei, Wuxi, Jiangsu 214000 (CN); ZHOU, Zhendong, Wuxi, Jiangsu 214000 (CN); MIAO, Yulai, Wuxi, Jiangsu 214000 (CN)
(74) Representative: Treeby, Philip David William
(86) International application number: PCT/CN2021/130939
(87) International publication number: WO 2022/227505

(56) References cited:
- WO-A1-2006/129912
- WO-A1-2019/007489
- CN-A- 106 968 080
- CN-A- 110 409 134
- CN-A- 112 160 117
- CN-A- 112 239 933
- CN-A- 112 239 935
- CN-A- 113 174 724
- US-A1- 2006 005 581
- US-A1- 2008 271 500

## Description

### FIELD

The present invention relates to, but is not limited to, the field of electrical appliances, and more particularly to, but not limited to, a washing machine and a control method and apparatus thereof.

### BACKGROUND

Some washing machines have a steam washing mode. In the steam washing mode, when the washing machine runs a steam program, water needs to be firstly fed into the washing machine. However, during the feeding of water into the washing machine, water flows into an inner tub through a through hole at the inner tub of the washing machine to wet clothes, causing the clothes to be aggregated, which is unfavorable for absorption of the steam by the clothes.

WO 2019/007489 A1 discloses a method that comprises: supplying water into the tub from the external water source till a level at which water does not enter into the drum; heating the water supplied in the tub to a temperature between 60°C and 95°C to produce steam; supplying steam to the drum while keeping the water temperature between 60°C and 95°C; and rotating the drum at a speed at which laundry inserted in the drum at least partially remains attached to the inner wall of the drum for the majority of the time during which the steam is supplied to the drum.

WO 2006/129912 A1 discloses a washing machine that has an improved structure adapted to generate steam in order to improve washing effect and enable sterilization of laundry using the steam. The washing machine comprises a tub to contain water, a heater installed in the tub, and a controller to control the heater to heat the water contained in the tub and to generate steam.

CN 112 239 935 A discloses a method for removing wrinkles of dry clothes by using the washing and drying integrated machine. The method comprises the following steps: injecting water into an outer barrel, wherein the water level of the injected water is lower than that of an inner barrel; heating the water in the outer barrel through a heating pipe and generating steam so as to wet the clothes in the inner barrel; and blowing hot air into the inner barrel to remove the wrinkles of the clothes.

### SUMMARY

The invention is defined by the appended claims. In the following, apparatus and/or methods referred to as embodiments that nevertheless do not fall within the scope of the claims should be understood as examples useful for understanding the invention.

### BRIEF DESCRIPTION OF THE DRAWINGS

The drawings are used for providing a further understanding of technical solutions of the present invention, and constitute a part of the specification. In addition, the drawings and embodiments of the present invention are used for explaining the technical solutions of the present invention, rather than constituting limitations to the technical solutions herein.
FIG. 1 is a flowchart of a control method of a washing machine according to an embodiment of the present invention.
FIG. 2 is a flowchart of a control method of a washing machine according to another embodiment of the present invention.
FIG. 3 is a schematic structural right view of a washing machine according to an embodiment of the present invention.
FIG. 4 is a schematic structural rear view of a washing machine according to an embodiment of the present invention.
FIG. 5 is a composition block diagram of a control device of a washing machine according to an embodiment of the present invention.
FIG. 6 is a composition block diagram of a first washing machine according to an embodiment of the present invention.
FIG. 7 is a composition block diagram of a second washing machine according to an embodiment of the present invention.
FIG. 8 is a partial schematic structural view of a washing machine according to an embodiment of the present

### Description of Reference Numerals:

1-control device, 11-first processor, 12-first computer readable storage medium, 2-washing machine, 5-inner tub, 6-outer tub, 7-heating device, 8-connection structure, 81-air outlet, 82-water inlet, 83-water outlet, 9-drying system, 91-drying channel, 92-drying fan, 10-water inlet pipeline.

### DETAILED DESCRIPTION

Embodiments of the present disclosure will be described below with reference to the accompanying drawings. It should be noted that, the embodiments in the present disclosure and the features in the embodiments may be combined arbitrarily without mutual contradiction.

Embodiments of the present disclosure provide a control method of a washing machine. The washing machine may include an inner tub, a heating device, and an outer tub arranged outside the inner tub. The heating device is configured to heat water entering the outer tub.

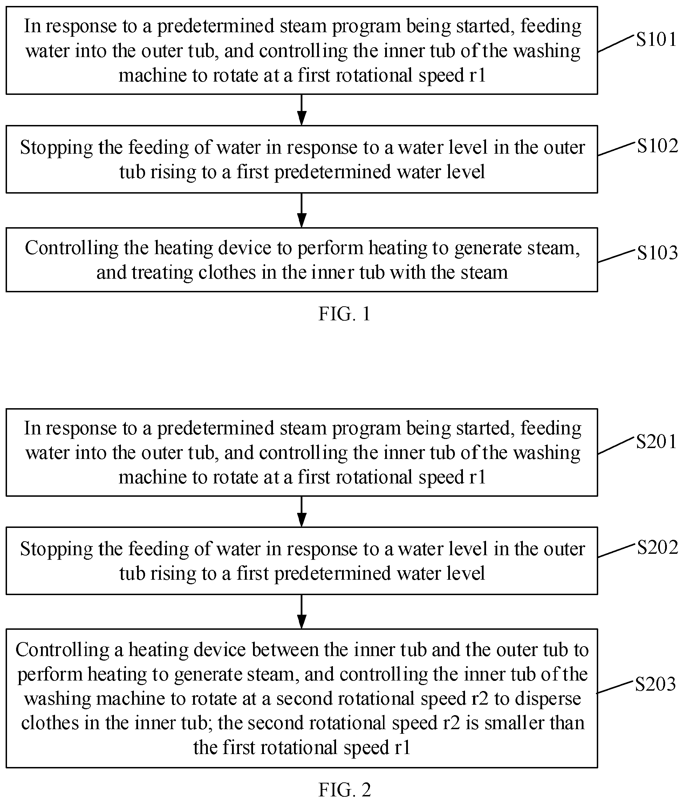

As illustrated in FIG. 1, the method may include operations at blocks S101 to S103.

At block S101, in response to a predetermined steam program being started, water is fed into the outer tub, and the inner tub of the washing machine is controlled to rotate at a first rotational speed r1.

At block S102, the feeding of water is stopped in response to a water feeding level in the outer tub reaching a first predetermined water level.

At block S103, the heating device is controlled to perform heating to generate steam, and clothes in the inner tub are treated with the steam.

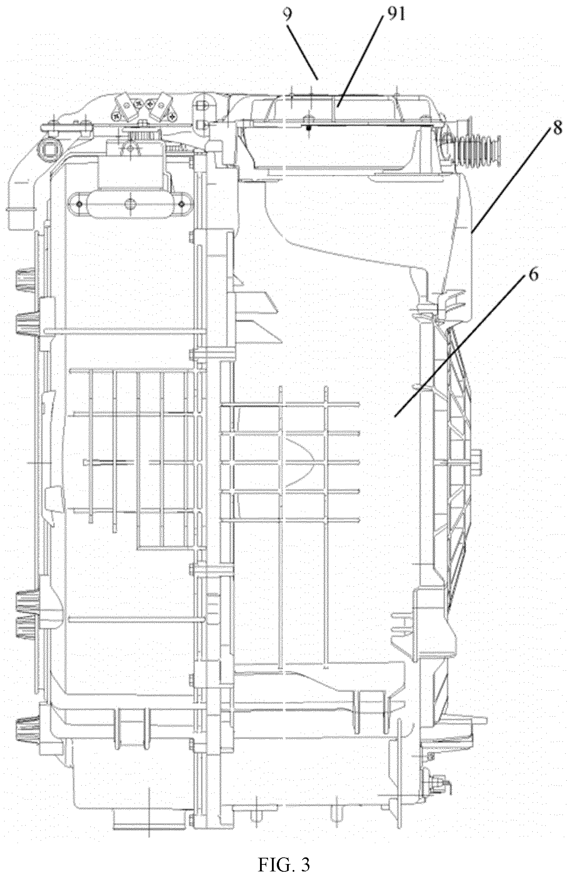

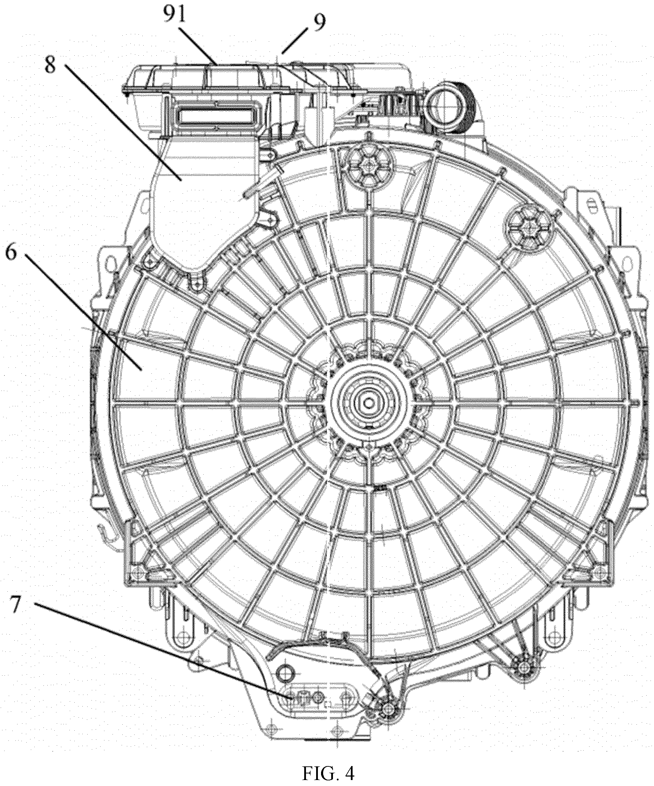

In an exemplary embodiment of the present disclosure, as illustrated in FIG. 3 and FIG. 4, the washing machine may include a heating device 7, an inner tub 5, and an outer tub 6 arranged outside the inner tub 5. The heating device 7 is configured to heat water entering the outer tub 6 to generate steam. The heating device 7 may be located between the inner tub 5 and the outer tub 6. For example, the heating device 7 is disposed between a bottom of the inner tub and a bottom of the outer tub. The inner tub may have one or more through holes. The through hole is configured to provide a passage for allowing the steam generated between the inner tub 5 and the outer tub 6 to enter the inner tub 5. The outer tub 6 may be connected to a water inlet port to feed water into the outer tub through the water inlet port.

A steam generator may be used for steam washing by the washing machine. However, the use of the steam generator results in high costs. Moreover, the steam generator has disadvantages such as poor manufacturing and poor reliability. In addition, user's using effect is not significant.

In an exemplary embodiment of the present disclosure, with the above washing machine structure, a simple, feasible, and reliable steam generation structure can be realized, thereby reducing manufacturing costs.

In an exemplary embodiment of the present disclosure, after the washing machine starts the steam program, water needs to be first fed into the outer tub before the steam is generated. During the feeding of water, the inner tub may be controlled to rotate synchronously. At this time, a rotational speed of the inner tub may be the first rotational speed r1.

In an exemplary embodiment of the present disclosure, the first rotational speed r1 during the feeding of water may be a high rotational speed. In this way, water can be thrown off due to rotation of the inner tub at the high rotational speed even if water falls onto an outer wall of the inner tub during the feeding of water. As a result, it is possible to prevent water flow from smoothly entering the inner tub through the through hole to wet the clothes inside the inner tub.

Since once the clothes becomes wet, the clothes becomes heavier and would aggregate together, leaving no gaps between the clothes. Consequently, when the steam is generated later, even a substantial amount of the steam flowing into the inner tub, compact aggregation of the clothes is unfavorable for absorption of the steam. In addition, once the clothes are wetted, the clothes have already absorbed a significant amount of water, even be saturated in a case of excessive feeding of the water into the inner tub. In this way, the clothes would no longer absorb the steam. Further, since the clothes are wetted by a large amount of cold water, a temperature of the clothes is lowered, which is unfavorable for sterilization and wrinkle removal of the clothes. Moreover, once the steam is generated, the cold water absorbed by the clothes would also lower a temperature of the steam, even causing a large amount of the steam to be condensed into water, thereby significantly reducing steam effect.

In an exemplary embodiment of the present disclosure, by controlling the inner tub to rotate at the high rotational speed during the feeding of water, the water flow can be effectively prevented from entering the inner tub, thus avoiding the wetting of the clothes by the water flow. Moreover, many problems potentially occurring as described in the above analysis can be also avoided. Therefore, with the solution according to the embodiments of the present disclosure, the problem in the steam washing can be solved by simply increasing the rotational speed of the inner tub during the feeding of water.

In an exemplary embodiment of the present disclosure, a specific value of the first rotational speed r1 may be defined based on different types of washing machines, different capacities, different motor configurations, and different requirements, and the present disclosure is not limited in this regard.

In an exemplary embodiment of the present disclosure, a water level detection device may be provided in the outer tub. A water level in the outer tub may be detected in real time by the water level detection device during the feeding of water.

In an exemplary embodiment of the present disclosure, the water level detection device may be any existing water level detection device that can be implemented. A specific implementation manner of the water level detection device is not limited in the present disclosure.

In an exemplary embodiment of the present disclosure, when the water level detection device detects that the water level in the outer tub has reached a predetermined water level such as the first predetermined water level, a corresponding water inlet valve may be controlled to be closed to stop the feeding of water into the outer tub.

In an exemplary embodiment of the present disclosure, a height of the first predetermined water level is smaller than a vertical distance between a bottom of the inner tub and a bottom of the outer tub.

In an exemplary embodiment of the present disclosure, in order to avoid the excessive feeding of water and direct flowing of water in the outer tub into the inner tub through the through hole located at the bottom of the inner tub, a vertical distance d between the bottom of the inner tub and the bottom of the outer tub may be used as a water level threshold, or 2d/3-3d/4 may be used as the water level threshold to provide an allowance.

In an exemplary embodiment of the present disclosure, the heating device may be controlled to be switched on after the feeding of water is stopped or at a predetermined time before the feeding of water is stopped, to heat water in the outer tub to gradually generate the steam.

In an exemplary embodiment of the present disclosure, the heating device may be a heating pipe, a heating plate, or the like. A specific implementation form, an arrangement position, an arrangement quantity, model selection, or heating power of the heating device are not limited herein and may be defined by the heating device itself as desired.

In an exemplary embodiment of the present disclosure, the method further includes: controlling, during the heating of the heating device, the inner tub to rotate at a second rotational speed r2 to disperse the clothes in the inner tub to generate the steam. The second rotational speed r2 is smaller than the first rotational speed r1.

As illustrated in FIG. 2, the method may include operations at blocks S201 to S203.

At block S201, in response to a predetermined steam program being started, water is fed into the outer tub, and the inner tub of the washing machine is controlled to rotate at the first rotational speed r1.

At block S202, the feeding of water is stopped in response to the water feeding level in the outer tub reaching the first predetermined water level.

At block S203, the heating device between the inner tub and the outer tub is controlled to perform the heating to generate the steam, and the inner tub of the washing machine is controlled to rotate at the second rotational speed r2 to disperse the clothes in the inner tub. The second rotational speed r2 may be smaller than the first rotational speed r1.

In an exemplary embodiment of the present disclosure, after the heating device starts performing the heating, the inner tub may still be controlled to rotate at this time, and the rotational speed of the inner tub in this case may be a low rotational speed, for example, the second rotational speed r2 smaller than the first rotational speed r1. Since no more water is fed at this time, there is no concern about the fed water flow entering the inner tub to wet the clothes in the inner tub. In this case, rotating the inner tub at the low rotational speed is to allow the generated steam to enter the inner tub through the through hole better, thereby preventing the steam from being blocked outside the inner tub due to too fast rotational speed of the inner tub. In addition, through the rotation of the inner tub at the low rotational speed, it is possible to allow for gradual dispersion of the clothes in the inner tub, thereby increasing a contact area between the clothes and the air in the inner tub greater. In this way, greater exposure of the clothes to steam is facilitated, thus enhancing wrinkle removal effect.

In an exemplary embodiment of the present disclosure, a specific value of the second rotational speed r2 may be defined based on different types of washing machines, different capacities, different motor configurations, and different requirements, and the present disclosure is not limited in this regard.

In an exemplary embodiment of the present disclosure, during the generation of the steam, when rotating at a low rotational speed, the inner tub may rotate alternatively in a clockwise rotational direction and a counterclockwise rotational direction. During the alternate rotation, the inner tub may first rotate by one or more revolutions in the clockwise rotational direction, and then rotate by one or more revolutions in the counterclockwise rotational direction.

In an exemplary embodiment of the present disclosure, the method may also include: detecting, from beginning of the heating to expiry of a predetermined steam generation duration (or a predetermined heating duration), whether the water level in the outer tub has dropped to a second predetermined water level in real time; continuing the heating to generate the steam when the water level in the outer tub has not yet reached the second predetermined water level; and feeding water into the outer tub again in response to the water level in the outer tub dropping to the second predetermined water level.

In an exemplary embodiment of the present disclosure, when it is detected that the water level in the outer tub has dropped to the second predetermined water level, it is indicated that an amount of water in the outer tub is low. In order to prevent dry heating, water may be fed into the outer tub again. Moreover, the rotational speed of the inner tub is still increased during the feeding of water, allowing the inner tub to rotate at a high rotational speed during the feeding of water. After the feeding of water is completed, the rotational speed of the inner tub may be lowered again.

In an exemplary embodiment of the present disclosure, the rotational speed of the inner tub may be increased to a third rotational speed when water is fed into the outer tub again. The third rotational speed may be greater than the second rotational speed.

In an exemplary embodiment of the present disclosure, a specific value of the third rotational speed may be defined based on different types of washing machines, different capacities, different motor configurations, and different requirements, and the present disclosure is not limited in this regard.

In an exemplary embodiment of the present disclosure, the third rotational speed may be set to be the same as, greater or smaller than the first rotational speed.

In an exemplary embodiment of the present disclosure, when water is fed again, the water level of the outer tub is still limited by the first predetermined water level. The height of the first predetermined water level may still be smaller than the vertical distance d between the bottom of the inner tub and the bottom of the outer tub.

In an exemplary embodiment of the present disclosure, as illustrated in FIG. 3, FIG. 4, and FIG. 8, the washing machine may also include a drying system 9. A space between the inner tub 5 and the outer tub 6 of the washing machine may be in communication with the drying system 9.

The method may also include: during the heating of the heating device to generate the steam, introducing the generated steam into the drying system to perform secondary heating on the introduced steam in the drying system.

In an exemplary embodiment of the present disclosure, the drying system 9 may be disposed at an upper part of the outer tub 6. The space between the inner tub 5 and the outer tub 6 may be in communication with the drying system 9, allowing the generated steam to move upwards to enter the drying system 9 through a communication channel.

In an exemplary embodiment of the present disclosure, as illustrated in FIG. 3, FIG. 4, and FIG. 8, the washing machine may also include a connection structure 8. The connection structure 8 may have an air outlet 81, a water inlet 82, and a water outlet 83.

The drying system 9 may have a drying channel 91. The inner tub 5 may be connected to the drying channel 91.

The connection structure 8 is constructed to connect the space between the inner tub 5 and the outer tub 6 with the drying channel 91 of the drying system 9 through the water outlet 83 and the air outlet 81, be connected to a water inlet pipeline 10 for supplying water to the washing machine through the water inlet 82, and be connected to the outer tub 6 of the washing machine through the water outlet 83. That is, the water inlet 82 of the connection structure 8 is in communication with the water inlet pipeline 10, the water outlet 83 is in communication with the outer tub 6, and the air outlet 81 is in communication with the drying channel 91.

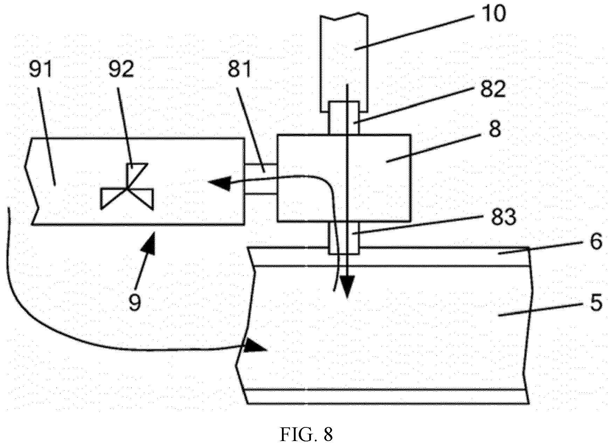

In an exemplary embodiment of the present disclosure, the air outlet 81, the water inlet 82, and the water outlet 83 may be in communication with each other. Water is fed into the outer tub 6 through the water inlet 82 and the water outlet 83 (a flow direction of the water is illustrated in a linear arrow of FIG. 8). Steam rising to a top of the outer tub 6 enters the drying channel 91 through the air outlet 81 and the water outlet 83 (a flow direction of the steam is illustrated in a curve arrow of FIG. 8).

In an exemplary embodiment of the present disclosure, after the steam enters the drying channel 91, a hot drying program may be executed to heat the steam again. In order to prevent a strength of the tub (such as the inner tub 5) and airtightness of a drying channel sealing strip for sealing the drying channel from being affected by too high steam temperature, a drying temperature may be reasonably controlled and may not be too high.

In an exemplary embodiment of the present disclosure, as illustrated in FIG. 8, a drying fan 92 may also be disposed in the drying channel 91.

In an exemplary embodiment of the present disclosure, in order to quickly introduce the steam into the drying channel 91, the drying fan 92 may be started. Moreover, a rotational speed of the drying fan 92 may be reasonably controlled.

In an exemplary embodiment of the present disclosure, introducing the generated steam into the drying system to perform the secondary heating on the steam includes: starting the drying fan 92 during the generation of the steam to allow the drying fan 92 to suck the steam into the drying channel 91 through the water outlet 83 and the air outlet 81 of the connection structure 8 and heat the steam in the drying channel 91. In this way, the secondary heating of the steam is implemented.

In an exemplary embodiment of the present disclosure, the method may also include: blowing the secondary-heated steam into the inner tub through rotation of the drying fan 9.

In an exemplary embodiment of the present disclosure, since the drying channel 91 is in communication with the inner tub 5, by providing the drying fan 92 with an appropriate rotational speed and rotational direction, the generated steam can be sucked into the drying channel 91 from the outer tub 6, and then the steam is delivered into the inner tub 5 after being subject the secondary heating in the drying channel 91.

In an exemplary embodiment of the present disclosure, a low-cost and double-steam effect can be achieved through the washing machine with the structure as described above.

Therefore, when the washing machine runs the steam program, water is first fed into the outer tub, and the inner tub rotates during the feeding of water. At this time, the inner tub rotates at the rotational speed of r1. Once the water level reaches the first predetermined water level, the feeding of water is stopped. At this time, the heating device starts performing the heating to generate steam gradually. The inner tub also synchronously rotates to disperse the clothes. In this way, it is convenient to increasing the contact area of the clothes with the steam, thereby enhancing the wrinkle removal effect. At this time, the inner tub rotates at the rotational speed of r2. During the generation of the steam, the water level will drop. When the water level drops to a predetermined water level, water is fed again. In addition, r1 > r2 indicates that the rotational speed of the inner tub during the feeding of water is greater than the rotational speed of the inner tub during the generation of the steam. During the feeding of water, the rotational speed of the inner tub is high. Therefore, a large operation speed of the inner tub can be ensured, allowing for difficult flowing of the water into the inner tub.

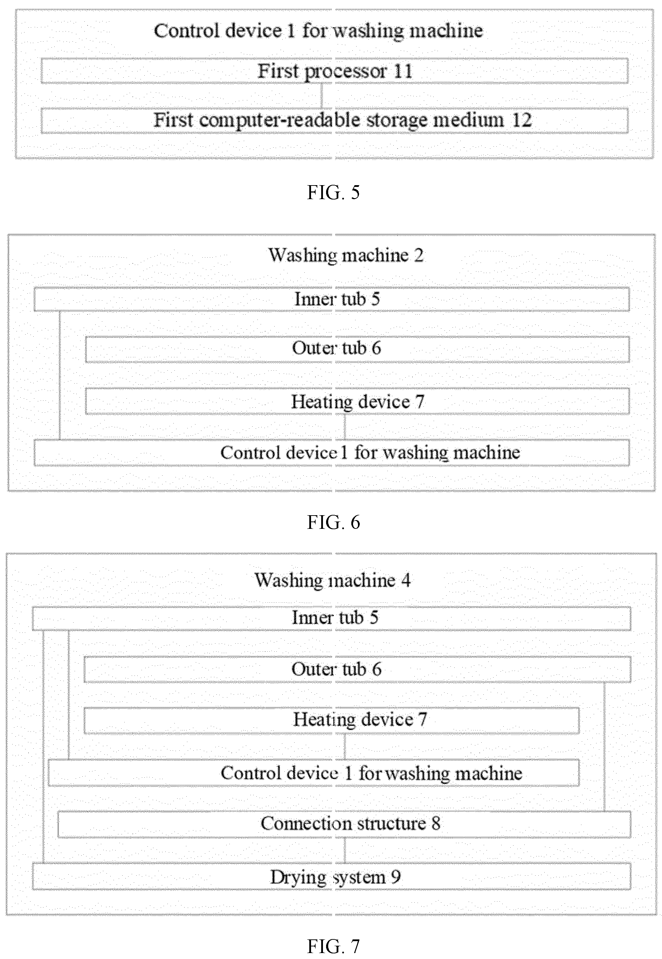

An embodiment of the present disclosure also provides a control device 1 of a washing machine. As illustrated in FIG. 5, the control device 1 may include a first processor 11 and a first computer readable storage medium 12. The first computer readable storage medium 12 has instructions stored thereon. When the instructions are executed by the first processor 11, the method according to any one of the above exemplary embodiments can be implemented.

In an exemplary embodiment of the present disclosure, any embodiment of the above control method may be applied in the embodiments of the control device 1 of the washing machine, and the detailed description thereof will be omitted herein.

An embodiment of the present disclosure provides a washing machine 2. As illustrated in FIG. 6, the washing machine 2 may include an inner tub 5, a heating device 7, an outer tub 6 arranged outside the inner tub 5, and the control device 1 as described above. The heating device 7 may be arranged between the inner tub 5 and the outer tub 6. The heating device 7 is configured to heat water entering the outer tub 6 to generate steam. The inner tub 5 has a through hole. The through hole is configured to provide a passage for allowing the stem to enter the inner tub 5. The outer tub 6 is connected to a water inlet port.

**In** an exemplary embodiment of the present disclosure, any embodiment of the above control method of the washing machine may be applied in the embodiments of the washing machine 2, and the detailed description thereof will be omitted herein.

**In** an exemplary embodiment of the present disclosure, as illustrated in FIG. 7 and FIG. 8, the washing machine also includes a connection structure 8 and a drying system 9.

The connection structure 8 may have an air outlet 81, a water inlet 82, and a water outlet 83. The water outlet 83 may be used as the water inlet port.

The drying system 9 may have a drying channel 91 and a drying fan 92 disposed in the drying channel 91. The inner tub 5 is connected to the drying channel 91.

The connection structure 8 is constructed to connect a space between the inner tub 5 and the outer tub 6 with the drying channel 91 through the water outlet 83 and the air outlet 81, and be connected to the water inlet pipeline 10 through the water inlet 82 and to the outer tub 6 through the water outlet 83.

The drying fan 92 is configured to suck the steam into the drying channel 91 and blow the heated steam into the inner tub 5.

**In** an exemplary embodiment of the present disclosure, any one of the embodiments of the control method of the washing machine described above may be applied in the embodiments of the washing machine 4, and detailed description thereof will be omitted herein.

It should be noted that, when the embodiments of the present disclosure relate to orientation indication such as up, down, left, right, front, and back, etc., the orientation indication is only used to explain a relative position relationship, a motion situation, etc. among components in a predetermined posture as shown in the drawings. When the specific posture is changed, the orientation indication is also changed accordingly.

In addition, when the embodiments of the present disclosure relate to terms such as "first" and "second", the terms such as "first" and "second" are used herein only for purposes of description, rather than being understood as indicating or implying relative importance or implicitly specifying a number of the associated technical features. Therefore, the features associated with "first" and "second" may explicitly or implicitly include at least one of the features. In the description of the embodiments of the present disclosure, "plurality" means at least two, unless otherwise clearly and specifically defined.

In the embodiments of the present disclosure, unless otherwise clearly specified and limited, terms such as "connect to", "fix" and the like should be understood in a broad sense. For example, the term "fix" may be a fixed connection or a detachable connection or connection as one piece; a mechanical connection or an electrical connection; a direct connection or an indirect connection through an intermediate; internal communication of two components or an interaction relationship between two components, unless otherwise clearly defined. For those of ordinary skill in the art, the specific meaning of the above-mentioned terms in the embodiments of the present disclosure may be understood according to specific circumstances.

## Claims

1. A control method of a washing machine (2, 4), the washing machine (2, 4) comprising an inner tub (5), a heating device (7), an outer tub (6) arranged outside the inner tub (5), and a drying system (9) in communication with a space between the inner tub (5) and the outer tub (6), the heating device (7) being configured to heat water entering the outer tub (6), the method comprising:
in response to a predetermined steam program being started, feeding (S101, S201) water into the outer tub (6), and controlling the inner tub (5) of the washing machine (2, 4) to rotate at a first rotational speed r1;
stopping (S102, S202) the feeding of water in response to a water level in the outer tub (6) rising to a first predetermined water level;
controlling (S103) the heating device (7) to perform heating to generate steam, and treating clothes in the inner tub (5) with the steam; and **characterised in that** the method further comprises:
introducing, during the generation of the steam, the steam into the drying system (9) to heat the steam by the drying system (9).

2. The control method according to claim 1, further comprising:
controlling, during the heating of the heating device (7) to generate the steam, the inner tub (5) to rotate at a second rotational speed r2 to disperse the clothes in the inner tub (5).

3. The control method according to claim 2, wherein the second rotational speed r2 is smaller than the first rotational speed r1.

4. The control method according to claim 2, further comprising:
detecting, from beginning of the heating to expiry of a predetermined steam generation duration, whether the water level in the outer tub (6) drops to a second predetermined water level; and
feeding water into the outer tub (6) again in response to the water level in the outer tub (6) dropping to the second predetermined water level, and increasing, in response to the feeding of water into the outer tub (6) again, the rotational speed of the inner tub (5) to a third rotational speed greater than the second rotational speed.

5. The control method according to any one of claims 1 to 4, wherein a height of the first predetermined water level is smaller than a vertical distance between a bottom of the inner tub (5) and a bottom of the outer tub (6).

6. The control method according to claim 1, wherein:
the washing machine (2, 4) further comprises a connection structure (8) having an air outlet (81), a water inlet (82), and a water outlet (83);
the drying system (9) has a drying channel (91) connected to the inner tub (5), a drying fan (92) being disposed in the drying channel (91);
the connection structure (8) is constructed to connect the space between the inner tub (5) and the outer tub (6) with the drying channel (91) through the water outlet (83) and the air outlet (81), and be connected to a water inlet pipeline (10) through the water inlet (82) and to the outer tub (6) through the water outlet (83); and
said introducing the steam into the drying system (9) to heat the steam by the drying system (9) comprises:
starting the drying fan (92) during the generation of the steam to allow the drying fan (92) to suck the steam into the drying channel (91) through the water outlet (83) and the air outlet (81) and heat the steam in the drying channel (91).

7. The control method according to claim 6, further comprising:
blowing the heated steam into the inner tub (5) by the drying fan (92).

8. A control device (1) of a washing machine (2, 4), the control device (1) comprising:
a first processor (11); and
a first computer readable storage medium (12) having instructions stored thereon,
wherein the instructions implement, when executed by the first processor (11), the method according to any one of claims 1 to 7.

9. A washing machine (2, 4), comprising:
an inner tub (5) having a through hole;
an outer tub (6) arranged outside the inner tub (5) and connected to a water inlet port;
a heating device (7) configured to heat water entering the outer tub (6) to generate steam, the through hole being configured to provide a passage for allowing the stem to enter the inner tub (5); and
the control device (1) according to claim 8.

10. The washing machine (2, 4) according to claim 9, wherein the heating device (7) is disposed between the inner tub (5) and the outer tub (6).

11. The washing machine (2, 4) according to claim 9 or 10, further comprising:
a connection structure (8) having an air outlet (81), a water inlet (82), and a water outlet (83), the water outlet (83) serving as the water inlet port; and
a drying system (9) having a drying channel (91) connected to the inner tub (5), wherein:
the connection structure (8) connects a space between the inner tub (5) and the outer tub (6) with the drying channel (91) through the water outlet (83) and the air outlet (81), and is connected to a water inlet pipeline (10) through the water inlet (82) and to the outer tub (6) through the water outlet (83).

12. The washing machine (2, 4) according to claim 11, wherein the drying system (9) further comprises a drying fan (92) disposed in the drying channel (91), the drying fan (92) being configured to suck the steam into the drying channel (91) and blow the heated steam into the inner tub (5).

## Patentansprüche

1. Steuerverfahren für eine Waschmaschine (2, 4), wobei die Waschmaschine (2, 4) einen inneren Bottich (5), eine Heizvorrichtung (7), einen äußeren Bottich (6), der außerhalb des inneren Bottichs (5) angeordnet ist, und ein Trocknungssystem (9) in Kommunikation mit einem Raum zwischen dem inneren Bottich (5) und dem äußeren Bottich (6) umfasst, wobei die Heizvorrichtung (7) dafür gestaltet ist, Wasser zu erhitzen, das in den äußeren Bottich (6) eintritt, wobei das Verfahren Folgendes umfasst:
in Reaktion darauf, dass ein festgelegtes Dampfprogramm gestartet wird, Einleiten (S101, S201) von Wasser in den äußeren Bottich (6), und Steuern des inneren Bottichs (5) der Waschmaschine (2, 4), sich mit einer ersten Drehzahl r1 zu drehen;
Beenden (S102, S202) des Einleitens von Wasser in Reaktion darauf, dass ein Wasserstand in dem äußeren Bottich (6) auf einen ersten festgelegten Wasserstand steigt;
Steuern (S103) der Heizvorrichtung (7), das Heizen zwecks Erzeugens von Dampf durchzuführen, und Behandeln von Wäsche in dem inneren Bottich (5) mit dem Dampf; und
**dadurch gekennzeichnet, dass** das Verfahren ferner Folgendes umfasst:
Einführen des Dampfes in das Trocknungssystem (9) während der Erzeugung des Dampfs, um den Dampf durch das Trocknungssystem (9) zu erhitzen.

2. Steuerverfahren nach Anspruch 1, ferner umfassend:
Steuern des inneren Bottichs (5) während des Heizens der Heizvorrichtung (7) zwecks Erzeugens vom Dampf, sich mit einer zweiten Drehzahl r2 zu drehen, um die Wäsche in dem inneren Bottich (5) zu verteilen.

3. Steuerverfahren nach Anspruch 2, wobei die zweite Drehzahl r2 kleiner als die erste Drehzahl r1 ist.

4. Steuerverfahren nach Anspruch 2, ferner umfassend:
Erkennen, vom Beginn des Erhitzens bis zum Verstreichen einer festgelegten Zeitspanne der Dampferzeugung, ob der Wasserstand in dem äußeren Bottich (6) auf einen zweiten festgelegten Wasserstand fällt; und
Einleiten von Wasser in den äußeren Bottich (6) in Reaktion darauf, dass der Wasserstand in dem äußeren Bottich (6) auf den zweiten festgelegten Wasserstand fällt, und in Reaktion auf das erneute Einleiten des Wassers in den äußeren Bottich (6) Erhöhen der Drehzahl des inneren Bottichs (5) auf eine dritte Drehzahl, die größer als die zweite Drehzahl ist.

5. Steuerverfahren nach einem der Ansprüche 1 bis 4, wobei eine Höhe des ersten festgelegten Wasserstandes kleiner als ein vertikaler Abstand zwischen einem Boden des inneren Bottichs (5) und einem Boden des äußeren Bottichs (6) ist.

6. Steuerverfahren nach Anspruch 1, wobei:
die Waschmaschine (2, 4) ferner eine Verbindungsstruktur (8) mit einem Luftauslass (81), einem Wassereinlass (82) und einem Wasserauslass (83) umfasst,
das Trocknungssystem (9) einen Trocknungskanal (91) aufweist, der mit dem inneren Bottich (5) verbunden ist, wobei ein Trocknungsgebläse (92) in dem Trocknungskanal (91) angeordnet ist;
die Verbindungsstruktur (8) dafür konstruiert ist, den Raum zwischen dem inneren Bottich (5) und dem äußeren Bottich (6) über den Wasserauslass (83) und den Luftauslass (81) mit dem Trocknungskanal (91) zu verbinden, und über den Wassereinlass (82) mit einer Wassereinlassleitung (10) und über den Wasserauslass (83) mit dem äußeren Bottich (6) verbunden zu sein; und
das Einführen des Dampfes in das Trocknungssystem (9), um den Dampf durch das Trocknungssystem (9) zu erhitzen, Folgendes umfasst:
Einschalten des Trocknungsgebläses (92) während des Erzeugens des Dampfes, um es dem Trocknungsgebläse (92) zu ermöglichen, den Dampf durch den Wasserauslass (82) und den Luftauslass (81) in den Trocknungskanal (91) zu saugen und den Dampf in dem Trocknungskanal (91) zu erhitzen.

7. Steuerverfahren nach Anspruch 6, ferner umfassend:
Einblasen des erhitzen Dampfes in den inneren Bottich (5) durch das Trocknungsgebläse (92).

8. Steuervorrichtung (1) für eine Waschmaschine (2, 4), wobei die Steuervorrichtung (1) Folgendes umfasst:
einen ersten Prozessor (11) und
ein erstes computerlesbares Speichermedium (12), auf dem Anweisungen gespeichert sind,
wobei die Anweisungen bei Ausführung durch den ersten Prozessor (11) das Verfahren nach einem der Ansprüche 1 bis 7 implementieren.

9. Waschmaschine (2, 4), umfassend:
einen inneren Bottich (5) mit einer Durchgangsöffnung,
einen äußeren Bottich (6), der außerhalb des inneren Bottichs (5) angeordnet und mit einem Wassereinlassanschluss verbunden ist,
eine Heizvorrichtung (7), die dafür gestaltet ist, Wasser zu erhitzen, das in den äußeren Bottich (6) eintritt, um Dampf zu erzeugen, wobei die Durchgangsöffnung dafür gestaltet ist, einen Durchlass bereitzustellen, um den Eintritt des Dampfes in den inneren Bottich (5) zu ermöglichen; und
die Steuervorrichtung (1) nach Anspruch 8.

10. Waschmaschine (2, 4) nach Anspruch 9, wobei die Heizvorrichtung (7) zwischen dem inneren Bottich (5) und dem äußeren Bottich (6) angeordnet ist.

11. Waschmaschine (2, 4) nach Anspruch 9 oder 10, ferner umfassend:
eine Verbindungsstruktur (8) mit einem Luftauslass (81), einem Wassereinlass (82) und einem Wasserauslass (83), wobei der Wasserauslass (83) als Wassereinlassanschluss dient; und
ein Trocknungssystem (9) mit einem Trocknungskanal (91), der mit dem inneren Bottich (5) verbunden ist, wobei:
die Verbindungsstruktur (8) einen Raum zwischen dem inneren Bottich (5) und dem äußeren Bottich (6) über den Wasserauslass (83) und den Luftauslass (81) mit dem Trocknungskanal (91) verbindet und über den Wassereinlass (82) mit einer Wassereinlassleitung (10) und über den Wasserauslass (83) mit dem äußeren Bottich (6) verbunden ist.

12. Waschmaschine (2, 4) nach Anspruch 11, wobei das Trocknungssystem (9) ferner ein Trocknungsgebläse (92) umfasst, das in dem Trocknungskanal (91) angeordnet ist, wobei das Trocknungsgebläse (92) dafür gestaltet ist, den Dampf in den Trocknungskanal (91) zu saugen und den erhitzten Dampf in den inneren Bottich (5) einzublasen.

## Revendications

1. Procédé de commande d'un lave-linge (2, 4), le lave-linge (2, 4) comprenant une cuve interne (5), un dispositif de chauffage (7), une cuve externe (6) agencée à l'extérieur de la cuve interne (5), et un système de séchage (9) en communication avec un espace entre la cuve interne (5) et la cuve externe (6), le dispositif de chauffage (7) étant conçu pour chauffer l'eau entrant dans la cuve externe (6), le procédé comprenant :
en réponse au démarrage d'un programme de vapeur prédéterminé, l'alimentation (S101, S201) en eau dans la cuve externe (6), et la commande de la cuve interne (5) du lave-linge (2, 4) pour sa rotation à une première vitesse de rotation r1 ;
l'arrêt (S102, S202) de l'alimentation en eau en réponse à l'élévation d'un niveau d'eau dans la cuve externe (6) à un premier niveau d'eau prédéterminé ;
la commande (S103) du dispositif de chauffage (7) pour réaliser un chauffage pour générer de la vapeur, et le traitement de vêtements dans la cuve interne (5) avec la vapeur ; et **caractérisé en ce que** le procédé comprend en outre :
l'introduction, pendant la génération de la vapeur, de la vapeur dans le système de séchage (9) pour chauffer la vapeur par le système de séchage (9).

2. Procédé de commande selon la revendication 1, comprenant en outre :
la commande, pendant le chauffage du dispositif de chauffage (7) pour générer la vapeur, de la cuve interne (5) pour sa rotation à une deuxième vitesse de rotation r2 pour disperser les vêtements dans la cuve interne (5).

3. Procédé de commande selon la revendication 2, dans lequel la deuxième vitesse de rotation r2 est inférieure à la première vitesse de rotation r1.

4. Procédé de commande selon la revendication 2, comprenant en outre :
la détection, du début du chauffage à l'expiration d'une durée de génération de vapeur prédéterminée, si oui ou non le niveau d'eau dans la cuve externe (6) chute à un second niveau d'eau prédéterminé ; et
l'alimentation en eau dans la cuve externe (6) une nouvelle fois en réponse à la chute du niveau d'eau dans la cuve externe (6) au second niveau d'eau prédéterminé, et l'augmentation, en réponse à l'alimentation en eau dans la cuve externe (6) une nouvelle fois, de la vitesse de rotation de la cuve interne (5) à une troisième vitesse de rotation supérieure à la deuxième vitesse de rotation.

5. Procédé de commande selon l'une quelconque des revendications 1 à 4, dans lequel une hauteur du premier niveau d'eau prédéterminé est inférieure à une distance verticale entre un fond de la cuve interne (5) et un fond de la cuve externe (6).

6. Procédé de commande selon la revendication 1, dans lequel :
le lave-linge (2, 4) comprend en outre une structure de raccordement (8) présentant une évacuation d'air (81), une admission d'eau (82), et une évacuation d'eau (83) ;
le système de séchage (9) présente un canal de séchage (91) raccordé à la cuve interne (5), un ventilateur de séchage (92) disposé dans le canal de séchage (91) ;
la structure de raccordement (8) est construite pour raccorder l'espace entre la cuve interne (5) et la cuve externe (6) avec le canal de séchage (91) à travers l'évacuation d'eau (83) et l'évacuation d'air (81), et être raccordée à une canalisation d'admission d'eau (82) à travers l'admission d'eau (82) et à la cuve externe (6) à travers l'évacuation d'eau (83) ; et
ladite introduction de la vapeur dans le système de séchage (9) pour chauffer la vapeur par le système de séchage (9) comprend :
le démarrage du ventilateur de séchage (92) pendant la génération de la vapeur pour permettre au ventilateur de séchage (92) d'aspirer la vapeur dans le canal de séchage (91) à travers l'évacuation d'eau (83) et l'évacuation d'air (81) et chauffer la vapeur dans le canal de séchage (91).

7. Procédé de commande selon la revendication 6, comprenant en outre :
le soufflage de la vapeur chauffée dans la cuve interne (5) par le ventilateur de séchage (92).

8. Dispositif de commande (1) d'un lave-linge (2, 4), le dispositif de commande (1) comprenant :
un premier processeur (11) ; et
un premier support de stockage lisible par ordinateur (12) sur lequel sont stockées des instructions,
dans lequel les instructions mettent en œuvre, lorsqu'elles sont exécutées par le premier processeur (11), le procédé selon l'une quelconque des revendications 1 à 7.

9. Lave-linge (2, 4), comprenant :
une cuve interne (5) présentant un trou traversant ;
une cuve externe (6) agencée à l'extérieur de la cuve interne (5) et raccordée à un orifice d'admission d'eau ;
un dispositif de chauffage (7) configuré pour chauffer l'eau entrant dans la cuve externe (6) pour générer de la vapeur, le trou traversant étant configuré pour fournir un passage afin de permettre à la vapeur d'entrer dans la cuve interne (5) ; et
le dispositif de commande (1) selon la revendication 8.

10. Lave-linge (2, 4) selon la revendication 9, dans lequel le dispositif de chauffage (7) est disposé entre la cuve interne (5) et la cuve externe (6).

11. Lave-linge (2, 4) selon la revendication 9 ou 10, comprenant en outre :
une structure de raccordement (8) présentant une évacuation d'air (81), une admission d'eau (82), et une évacuation d'eau (83), l'évacuation d'eau (83) servant d'orifice d'admission d'eau ; et
un système de séchage (9) présentant un canal de séchage (91) raccordé à la cuve interne (5), dans lequel :
la structure de raccordement (8) raccorde un espace entre la cuve interne (5) et la cuve externe (6) avec le canal de séchage (91) à travers l'évacuation d'eau (83) et l'évacuation d'air (81), et est raccordée à une canalisation d'admission d'eau (10) à travers l'admission d'eau (82) et à la cuve externe (6) à travers l'évacuation d'eau (83).

12. Lave-linge (2, 4) selon la revendication 11, dans lequel le système de séchage (9) comprend en outre un ventilateur de séchage (92) disposé dans le canal de séchage (91), le ventilateur de séchage (92) étant configuré pour aspirer la vapeur dans le canal de séchage (91) et souffler la vapeur chauffée dans la cuve interne (5).
